# EUROPÄISCHE PATENTSCHRIFT

(11) **EP 0 513 910 B1**
(45) Veröffentlichungstag und Bekanntmachung des Hinweises auf die Patenterteilung: **29.11.1995**
(21) Anmeldenummer: 92201310.7
(22) Anmeldetag: 08.05.1992
(51) Int. Cl.: H02M 7/217, H02M 7/219

(54) **Gleichrichterschaltung**
Rectifier circuit
Circuit redresseur

(30) Priorität: 14.05.1991 DE 4115677
(43) Veröffentlichungstag der Anmeldung: 19.11.1992
(73) Patentinhaber: Philips Patentverwaltung GmbH, 22335 Hamburg (DE); Philips Electronics N.V., 5621 BA Eindhoven (NL)
(72) Erfinder: Axer, Klaus, Dr., c/o Philips Patentver. GmbH, W-2000 Hamburg 1 (DE)
(74) Vertreter: Poddig, Dieter, Dipl.-Ing.

(56) Entgegenhaltungen:
- EP-A- 0 112 119
- DE-A- 3 400 973
- US-A- 4 139 880
- US-A- 4 533 988

## Beschreibung

Die Erfindung betrifft eine Gleichrichterschaltung mit einem ersten und einem zweiten Eingangsanschluß zum Zuführen einer Eingangsspannung und einem ersten und einem zweiten Ausgangsanschluß zum Abgeben einer Gleichspannung, mit wenigstens einem ersten selbstsperrenden Feldeffekt-Transistor (FET), dessen Hauptstrombahn zwischen dem ersten Eingangsanschluß und dem ersten Ausgangsanschluß angeordnet ist, und mit einer dem ersten FET zugeordneten Vorspannungsschaltung, die eine mit dem Gate des ersten FET verbundene erste gleichrichtende Anordnung enthält, um eine Vorspannung zwischen diesem Gate und dem ersten Eingangsanschluß zu erzeugen.

Eine derartige Gleichrichterschaltung ist bekannt aus der EP 0 112 119 A3. Darin sind zwei derartige Gleichrichterschaltungen zusammen mit zwei weiteren Feldeffekttransistoren zu einer Brückengleichrichterschaltung ausgebildet, die dazu dient, beim Anschluß eines Gerätes, insbesondere eines Telefonapparates, an zwei Gleichspannung führende Leitungen auch bei Verpolung der Anschlüsse das Gerät immer mit der richtigen Polarität der Gleichspannung zu versorgen. Es werden nur Feldeffekttransistoren gleichen Leitfähigkeitstyps verwendet, und durch die Erzeugung einer Vorspannung für wenigstens einen Transistor in der Brücke wird erreicht, daß der gesamte Spannungsabfall über der Brücke sehr gering bleibt. Die Vorspannungsschaltung enthält jedoch eine Oszillatorschaltung, einen Inverter, zwei Kondensatoren und eine übliche Brückengleichrichterschaltung und ist damit sehr aufwendig aufgebaut.

Aufgabe der Erfindung ist es, eine Gleichrichterschaltung der eingangs genannten Art anzugeben, bei der die Vorspannungsschaltung wesentlich einfacher aufgebaut ist und die dennoch eine Gleichrichtung mit einem sehr geringen Spannungsabfall ermöglicht.

Diese Aufgabe wird erfindungsgemäß dadurch gelöst, daß für eine periodisch variierende Eingangsspannung, insbesondere eine Wechselspannung, die Vorspannungsschaltung zum Erzeugen einer im wesentlichen konstanten Vorspannung eingerichtet ist und eine erste Kapazität, die zwischen dem Gate des ersten FET und dem ersten Eingangsanschluß angeordnet ist, sowie eine erste Impedanz enthält, die in Reihe mit der ersten gleichrichtenden Anordnung zwischen dem Gate des ersten FET und einem mit dem zweiten Eingangsanschluß gekoppelten Schaltungspunkt angeordnet ist.

Erfindungsgemäß wird also die periodisch variierende Eingangsspannung selbst dazu verwendet, die Vorspannung für den ersten FET zu erzeugen, um dessen Schwellspannung herabzusetzen und den Spannungsabfall bei der Gleichrichtung zu verringern. Dabei wird diese Vorspannung ständig aufrechterhalten, so daß der erste FET als gleichrichtendes Element mit einem geringen Spannungsabfall wirkt. Da über das Gate des ersten FET nur äußerst kleine Ströme fließen, ist für die erste Kapazität ein kleiner Wert ausreichend. Über die erste Impedanz fließen daher auch nur entsprechend kleine Ströme.

Die erste gleichrichtende Anordnung kann im einfachsten Fall als Diode ausgeführt sein, die jedoch bei Integration aller Elemente der Gleichrichterschaltung in einem einzigen Halbleiterkörper nicht ohne weiteres im gleichen Herstellungsprozeß wie Feldeffekt-Transistoren gebildet werden kann. Zweckmäßig ist es daher nach einer Ausgestaltung der Erfindung, daß die erste gleichrichtende Anordnung ein erster zusätzlicher selbstsperrender FET vom gleichen Leitfähigkeitstyp wie der erste FET ist und daß das Gate des ersten zusätzlichen FET mit dem einen Anschluß seiner Hauptstrombahn verbunden ist. Dadurch können alle FET auf die gleiche Weise hergestellt werden.

Wenn der über die erste Impedanz fließende mittlere Strom größer ist als der über das Gate des ersten FET abfließende Strom, kann es sein, daß über die erste gleichrichtende Anordnung das Gate des ersten FET so vorgespannt wird, daß dieser auch bei abnehmender Eingangsspannung noch leitend ist, so daß ein umgekehrter Stromfluß von dem betreffenden Pol der Gleichspannung zur Eingangsspannung möglich ist. Um dies zuverlässig zu verhindern, ist es nach einer weiteren Ausgestaltung der Erfindung zweckmäßig, daß parallel zu jeder ersten Kapazität je ein spannungsbegrenzendes Element geschaltet ist. Dieses Element kann beispielsweise als übliche Zener-Diode ausgeführt sein. Eine einfachere Ausführung besteht jedoch nach einer weiteren Ausgestaltung der Erfindung darin, daß das spannungsbegrenzende Element ein zusätzlicher selbstsperrender FET vom gleichen Leitfähigkeitstyp wie der erste FET ist, dessen Gate mit dem einen Anschluß seiner Hauptstrombahn verbunden ist und dessen Schwellspannung im wesentlichen gleich der Schwellspannung des ersten FET ist. Wenn alle FETs zusammen in einem einzigen Herstellungsvorgang gemeinsam erzeugt werden, haben sie automatisch eine weitgehend gleiche Schwellspannung, so daß das Gate des ersten FET automatisch so vorgespannt wird, daß der Stromfluß durch diesen FET gerade beendet wird, wenn der Momentanwert der Eingangsspannung kleiner ist als die Gleichspannung, so daß eine mittels eines Kondensators geglättete Gleichspannung erzeugt werden kann, deren Wert nahezu gleich der Maximalamplitude der Wechselspannung ist. Auf diese Weise wird eine Gleichrichterschaltung mit einem äußerst geringen Spannungsabfall gebildet, der insbesondere auch kleiner sein kann als bei einer Gleichrichterschaltung mit einer üblichen Diode.

Die Impedanz in Reihe mit der ersten gleichrichtenden Anordnung kann auf verschiedene Weise ausgebildet sein. Eine Möglichkeit für eine im wesentlichen symmetrische Wechselspannung als Eingangsspannung besteht nach einer weiteren Ausgestaltung der Erfindund gemäß Anspruch 5 darin, daß die erste Impedanz ein strombegrenzendes Element, insbesondere ein im wesentlichen ohmscher Widerstand ist und mit dem zweiten Eingangsanschluß direkt verbunden ist. Hierbei ist also die erste gleichrichtende Anordnung vorzugsweise über einen hochohmigen Widerstand mit dem anderen Eingangsanschluß verbunden, sofern die erste gleichrichtende Anordnung nicht selbst sehr hochohmig ausgebildet ist, was bei Realisierung als FET leicht möglich ist.

Eine andere Möglichkeit, die Impedanz auszubilden, besteht nach einer anderen Ausgestaltung der Erfindung gemäß Anspruch 6 darin, daß die erste Impedanz eine zweite Kapazität ist und daß der Verbindungspunkt zwischen der zweiten Kapazität und der ersten gleichrichtenden Anrodnung über eine zweite gleichrichtende Anordnung mit dem ersten Eingangsanschluß gekoppelt ist. Diese Möglichkeit ist beispielsweise zweckmäßig, wenn die Eingangsspannung eine unipolare pulsierende Spannung ist, wobei die erfindungsgemäße Gleichrichterschaltung für Einweg-Gleichrichtung verwendet wird und der zweite Ausgangsanschluß direkt mit dem anderen Eingangsanschluß verbunden ist. Die zweite Kapazität ist zweckmäßig sehr viel kleiner als die erste Kapazität, so daß letztere in jeder Periode der Eingangsspannung nur wenig nachgeladen wird. Die zweite gleichrichtende Anordnung kann nach einer weiteren Ausgestaltung der Erfindung ein dritter zusätzlicher selbstsperrenden FET des gleichen Leitfähigkeitstyps wie der erste FET ist, dessen Gate mit dem einen Anschluß seiner Hauptstrombahn verbunden ist. Dadurch können alle Elemente der Gleichrichterschaltung leicht in einem Halbleiterkörper integriert hergestellt werden.

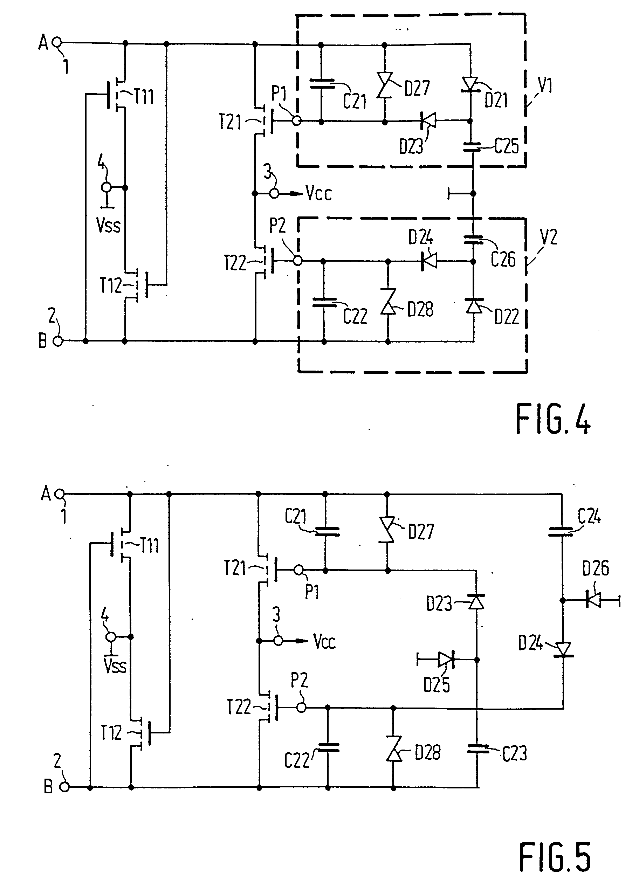

Die erfindungsgemäße Gleichrichterschaltung ist in ihrer. Grundform für z.B. symmetrische Wechselspannungen ein Einweg-Gleichrichter. Andererseits läßt sich die erfindungsgemäBe Gleichrichterschaltung jedoch auch dazu verwenden, eine Brückengleichrichterschaltung aufzubauen, wie dies aus der eingangs genannten EP 0 112 119 A3 grundsätzlich bekannt ist. In diesem Falle gibt es noch weitere Schaltungsmöglichkeiten (siehe Figuren 4, 5, 6) für den Anschluß der zweiten Kapazitäten und der zweiten gleichrichtenden Anordnungen. Eine solche Schaltungsmöglichkeit ist bei einer Brückengleichrichterschaltung gemäß Anspruch 8 mit einem ersten und einem zweiten Eingangsanschluß für eine im wesentlichen symmetrische periodische Wechselspannung als Eingangsspannung und einem ersten und einem zweiten Ausgangsanschluß für eine zu erzeugende Gleichspannung sowie mit zwei Zweigen, bei denen im ersten Zweig zwei FET eines ersten Leitfähigkeitstyps zwischen jedem der Eingangsanschlüsse und dem ersten Ausgangsanschluß angeordnet sind, deren Gates mit dem jeweils anderen Eingangsanschluß verbunden sind, und im zweiten Zweig zwei Gleichrichterschaltungen nach einem der Ansprüche 6 oder 7 mit FETs ebenfalls des ersten Leitfähigkeitstyps zwischen jedem der Eingangsanschlüsse und dem zweiten Ausgangsanschluß angeordnet sind, dadurch gekennzeichnet, daß von jeder Gleichrichterschaltung die zweite Kapazität mit dem ersten Ausgangsanschluß und die zweite gleichrichtende Anordnung direkt mit dem ersten Eingangsanschluß verbunden ist. Der erste Ausgangsanschluß ist nämlich über den ersten Zweig der Brückengleichrichterschaltung, in dem einer der FET abwechselnd leitend ist, mit dem jeweils zweiten Eingangsanschluß verbunden.

Entsprechend ist es bei einer Brückengleichrichterschaltung der vorgenannten Art gemäß Anspruch 9 auch möglich, daß von jeder Gleichrichterschaltung die zweite gleichrichtende Anordnung mit dem ersten Ausgangsanschluß und die zweite Kapazität direkt mit dem zweiten Eingangsanschluß verbunden ist. Hierbei erfolgt die Aufladung der ersten Kapazität in der negativen Phase der Wechselspannung an dem zugehörigen Eingangsanschluß, und zwar während diese Wechselspannung dem Betrag nach ansteigt. Bei der vorher genannten Ausführung der Brückenschaltung erfolgt die Aufladung der ersten Kapazität dagegen bei der positiven Phase der Wechselspannung an dem zugehörigen Eingangsanschluß, und zwar während der Betrag der Wechselspannung abnimmt.

Häufig ist die Gleichrichterschaltung, insbesondere wenn sie für integrierte Halbleiterschaltungen mit induktiver Speisung verwendet wird, mit allen zugehörigen FETs in einem gemeinsamen Halbleiter integriert. In diesem Falle ist eine besonders günstige Ausführungsform der zweitgenannten Brückengleichrichterschaltung gemäß Anspruch 10 dadurch gekennzeichnet, daß in jeder Gleichrichterschaltung die zweite gleichrichtende Anordnung durch den Übergang zwischen der Hauptstrombahn des ersten zusätzlichen FET und den mit dem ersten Ausgangsanschluß verbundenen Halbleiterkörper gebildet ist. Auf diese Weise ist für die zweite gleichrichtende Anordnung kein gesonderter Platz erforderlich.

Ausführungsbeispiele der Erfindung werden nachstehend anhand der Zeichnung näher erläutert. Es zeigen
Fig. 1 eine erste Ausführung der erfindungsgemäßen Gleichrichterschaltung,
Fig. 2 die Schaltung nach Fig. 1 ausschließlich mit FETs gleichen Leitfähigkeitstyps realisiert,
Fig. 3 eine weitere Ausführung der erfindungsgemäßen Gleichrichterschaltung,
Fig. 4 eine Ausführung der erfindungsgemäßen Gleichrichterschaltung als Brückengleichrichterschaltung,
Fig. 5 eine andere Ausführung einer Brückengleichrichterschaltung,
Fig. 6 die Schaltung nach Fig. 5 ausschließlich mit FETs gleichen Leitfähigkeitstyps realisiert,
Fig. 7 eine Realisierung einer Kapazität als FET.

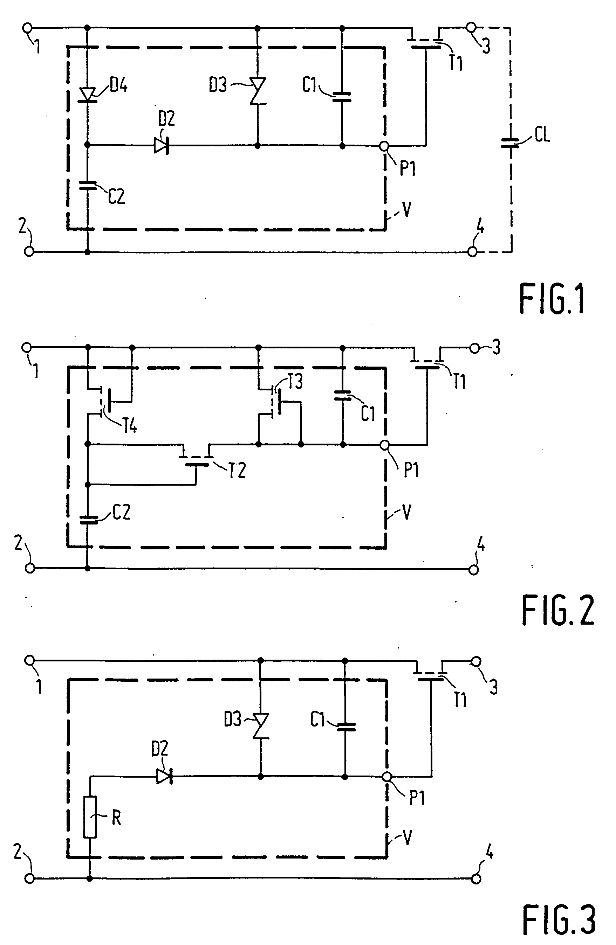

In Fig. 1 ist eine Gleichrichterschaltung dargestellt, in der ein Eingangsanschluß 1 über die Hauptstrombahn eines selbstsperrenden Feldeffekt-Transistors (FET) T1 mit einem Ausgangsanschluß 3 verbunden ist. Der andere Eingangsanschluß 2 ist direkt mit dem zweiten Ausgangsanschluß 4 verbunden. Das Gate des FET T1 ist mit einem Punkt P1 einer Vorspannungsschaltung V verbunden, von der das Gate eine Vorspannung erhält, die die Schwellspannung des Transistors T1 verringert.

Zur Erläuterung sei zunächst angenommen, daß diese Vorspannung am Punkt P1 Null ist, d.h. der Punkt P1 führt dieselbe Spannung wie der Eingangsanschluß 1. Wenn weiter angenommen wird, daß T1 ein N-Kanal FET ist, fließt durch diesen erst dann ein Strom, wenn die Eingangsspannung am Eingang 1 um die Schwellspannung des FET T1 positiver ist als der Ausgangsanschluß 3. Dies gilt sowohl, wenn die Ausgangsanschlüsse 3 und 4 über einen Lastwiderstand miteinander verbunden sind, als auch, wenn zwischen den Ausgangsanschlüssen 3 und 4 ein Glättungskondensator CL angeschlossen ist, um eine geglättete Gleichspannung zu erhalten. Im letzteren Falle entsteht zwischen den Ausgangsanschlüssen 3 und 4, also am Glättungskondensator CL, eine Gleichspannung, die um die Schwellspannung des FET T1 niedriger ist als die maximale positive Amplitude der Eingangsspannung zwischen den Eingangsanschlüssen 1 und 2. Dies gilt sowohl für den Fall, daß die Eingangsspannung eine unipolare pulsierende Spannung ist, wobei die dargestellte Gleichrichterschaltung dann beispielsweise einen Teil einer Spannungsvervielfacherschaltung darstellt, als auch für den Fall, daß die Eingangsspannung eine symmetrische Wechselspannung ist, wobei die dargestellte Gleichrichterschaltung einen Einweggleichrichter bildet.

Um die Eingangsspannung möglichst optimal auszunutzen, d.h. mit einem möglichst geringen Spannungsabfall zum Ausgangsanschluß 3 weiterzuleiten, ist nun eine Vorspannungsschaltung V vorgesehen, die am Punkt P1 eine Vorspannung für das Gate des FET gegenüber dem Eingangsanschluß 1 und dem damit verbundenen Hauptstrombahnanschluß des FET T1 erzeugt. Wenn diese Vorspannung nahezu gleich der Schwellspannung des FET T1 ist, wird damit erreicht, daß bereits ein Strom durch den FET T1 fließt, wenn die Spannung am Eingangsanschluß 1 nur geringfügig höher als die Spannung am Ausgangsanschluß 3 ist, weil dann nämlich die Spannung am Punkt P1, die parallel mit der Spannung am Eingangsanschluß 1 mitgeführt wird, um die Schwellspannung größer ist als die Spannung am Ausgangsanschluß 3. Auf diese Weise entsteht eine Gleichrichterschaltung mit einem sehr geringen Spannungsabfall.

Zur Erzeugung der Vorspannung enthält die Vorspannungsschaltung V eine Kapazität C1, die zwischen dem Punkt P1 und damit dem Gate des FET T1 und dem Eingangsanschluß 1 liegt. Da über ein Gate nur ein äußerst geringer Leckstrom fließt, tritt nur ein geringer Ladungsverlust der Kapazität C1 auf, so daß eine im wesentlichen konstante Vorspannung am Punkt P1 erzeugt wird.

Ein etwaiger Ladungsverlust kann dadurch ausgeglichen werden, daß die Kapazität C1 in jeder Periode der Eingangsspannung nachgeladen wird. Dadurch reicht für die Kapazität C1 ein geringer Wert aus, beispielsweise sind C1 = 10 pF bei einer Eingangsfrequenz von 100 kHz völlig ausreichend. Da der Ladungsverlust der Kapazität C1 jedoch nicht eindeutig vorhergesagt werden kann, da Leckströme beispielsweise auch temperaturabhängig sind, kann es sein, daß durch eine zu große Nachladung der Kapazität C1 die Vorspannung höher wird als die Schwellspannung. Dies muß jedoch unbedingt vermieden werden, da die in diesem Falle der FET T1 auch noch leitend sein würde, wenn die Spannung am Eingangsanschluß 1 niedriger ist als die Spannung am Ausgangsanschluß 3 und somit ein Strom vom Ausgangsanschluß 3 zum Eingangsanschluß 1 durch den FET T1 fließt, der beispielsweise einen Glättungskondensator CL wieder entladen würde. Aus diesem Grunde wird die Vorspannung durch ein spannungsbegrenzendes Element, in diesem Falle eine Zenerdiode D3, parallel zur Kapazität C1 auf einen Wert unterhalb der Schwellspannung des FET T1 begrenzt.

Das Nachladen der Kapazität C1 erfolgt über eine gleichrichtende Anordnung, die hier als Diode D2 dargestellt ist, aus einer Hilfsspannung, die hier von einer Diode D4, die mit dem Eingangsanschluß 1 verbunden ist, und einer Kapazität C2 erzeugt ist, die mit dem anderen Eingangsanschluß 2 verbunden ist. Wenn die Eingangsspannung am Eingangsanschluß 1 positiv gegenüber dem Eingangsanschluß 2 ist, wird die Kapazität C2 über die Diode D4 aufgeladen, wobei die Diode D2 gesperrt bleibt, wenn angenommen wird, daß am Punkt P1 bereits eine positive Vorspannung aufgebaut ist. Wenn danach die Eingangsspannung zwischen den Eingangsanschlüssen 1 und 2 wieder niedriger wird oder gar das Vorzeichen wechselt, wird durch den Kondensator C1 auch die Spannung am Punkt P1 gegenüber dem Eingangsanschluß 2 niedriger, so daß nun Ladung von der Kapazität C2 über die Diode D2 zur Kapazität C1 übertragen werden kann. Da hierfür nur eine geringe Ladung erforderlich ist, hat die Kapazität C2 zweckmäßig einen sehr kleinen Wert, der z.B. etwa zwei Größenordnungen kleiner ist als der Wert der Kapazität C1. Dadurch braucht über die Zenerdiode D3 nur eine geringe Ladung abgeführt zu werden.

Wenn die Schaltung nach Fig. 1 Teil einer integrierten Schaltung ist, die in einem einzigen Halbleiterkörper integriert ist, lassen sich Feldeffekt-Transistoren und übliche Dioden und gar Zenerdioden nur schwer mit demselben Prozeß herstellen, so daß üblicherweise zusätzliche Prozeßschritte notwendig wären. Eine Gleichrichterschaltung mit dem Grundaufbau gemäß Fig. 1, die sich jedoch leichter integrieren läßt, ist in Fig. 2 dargestellt. Dabei ist die Diode D2 in Fig. 1 hier durch einen selbstsperrenden FET T2 gebildet, dessen Gate ebenso wie sein einer Hauptstrombahnanschluß mit der Kapazität C2 verbunden ist. Entsprechend ist die Diode D4 in Fig. 1 hier durch einen FET T4 gebildet, dessen Gate ebenso wie sein einer Hauptstrombahnanschluß mit dem Eingangsanschluß 1 verbunden ist. Über diesen FET T4 wird die Kapazität C2 auf eine Spannung aufgeladen, die um die Schwellspannung des FET T4 niedriger als die maximale Eingangsspannung ist. Wenn danach die Eingangsspannung wieder niedriger wird, entlädt sich die Kapazität C2 über den FET T2 in die Kapazität C1, wenn die Spannung am Punkt P1 um die Schwellspannung des FET T2 niedriger ist als die maximale Spannung an der Kapazität C2. Da die Vorspannung am Punkt P1 jedoch etwa um die Schwellspannung des FET T1 größer sein soll als die Spannung am Eingangsanschluß 1 und andererseits die Schwellspannungen der FETs infolge der Herstellung mit demselben Prozeß im wesentlichen gleich sind, muß die maximale Amplitude der Eingangsspannung zwischen den Eingangsanschlüssen 1 und 2 mindestens das Dreifache der Schwellspannung der FETs betragen, wenn eine ausreichende Vorspannung am Punkt P1 erzeugt werden soll. Dies ist bei den meisten gebräuchlichen Eingangsspannungen jedoch durch entsprechende Einstellung der Schwellspannungen beim Herstellungsprozeß leicht erreichbar.

Aufgrund der Tatsache, daß die Schwellspannungen aller FETs bei Herstellung mit demselben Prozeß nahezu gleich sind, läßt sich auch die Zenerdiode D3 in Fig. 1 besonders einfach durch den FET T3 in Fig. 2 herstellen, dessen Hauptstrombahn parallel zur Kapazität C1 liegt und dessen Gate mit dem Punkt P1 verbunden ist, da dieser FET T3 gerade dann leitend wird, wenn die Spannung über der Kapazität C1 die Schwellspannung des FET T3 überschreitet. Da die Schwellspannung des FET T1 praktisch den gleichen Wert hat, wird die Vorspannung am Punkt P1 automatisch auf diesen Wert begrenzt.

In Fig. 3 ist eine Gleichrichterschaltung dargestellt, die noch einfacher aufgebaut ist als die Schaltung nach Fig. 1, jedoch eine im wesentlichen symmetrische Wechselspannung als Eingangsspannung voraussetzt. Die Vorspannungsschaltung V enthält hier außer der Kapazität C1 und der Zenerdiode D3 sowie der Diode D2 einen damit in Reihe geschalteten und an den Eingangsanschluß 2 angeschlossenen hochohmigen Widerstand R. Während des Teils der Periode der Eingangsspannung, in der der Eingangsanschluß 1 negativ gegenüber dem Eingangsanschluß 2 ist, wird dann die Kapazität C1 über den Widerstand R und die Diode D2 aufgeladen, bis die Zenerdiode D3 leitend wird. Auf diese Weise wird eine positive Vorspannung am Punkt P1 für das Gate des FET T1 erzeugt. Wenn die Diode D2 als FET ausgeführt wird, wie dies anhand der Fig. 2 erläutert wurde, kann dieser FET so hochohmig dimensioniert werden, daß ein gesonderter Widerstand R weggelassen werden kann. Bei der Schaltung nach Fig. 3 liefert der Eingangsanschluß 2 also direkt die Hilfsspannung zum Nachladen der Kapazität C1.

In Fig. 4 ist eine Brückengleichrichterschaltung dargestellt, die aus einer symmetrischen Wechselspannung eine Gleichspannung mit geringem Spannungsabfall erzeugt, wobei diese Gleichspannung ebenfalls durch einen Glättungskondensator in eine geglättete Gleichspannung umgesetzt werden kann. Die in Fig. 4 dargestellte Brückengleichrichterschaltung weist zwei Zweige auf, die die Transistoren T11 und T12 sowie T21 und T22 enthalten. Dies sind selbstsperrende Feldeffekt-Transistoren, und alle sind vom gleichen Leitfähigkeitstyp. Im ersten Zweig verbindet der Transistor T11 den Eingangsanschluß 1 für den einen Pol A einer Wechselspannung mit dem Ausgangsanschluß 4 der zu erzeugenden Gleichspannung Vₛₛ, und der Transistor T12 verbindet den Eingangsanschluß 2 für den anderen Pol B der Wechselspannung mit dem Ausgangsanschluß 4. Die Gates der Transistoren T11 und T12 sind mit dem jeweils anderen Eingangsanschluß 2 bzw. 1 verbunden. Wenn angenommen wird, daß es sich um n-leitende Feldeffekt-Transistoren handelt, so wird bei der Halbwelle der Wechselspannung, bei der der Pol A positiv ist gegenüber dem Pol B, der Transistor T12 durchgeschaltet und der Eingangsanschluß 2 mit dem Ausgangsanschluß verbunden.

Bei der anderen Halbwelle ist dann entsprechend der Transistor T11 leitend. In beiden Fällen tritt nur ein Spannungsabfall zwischen dem jeweiligen Eingangsanschluß und dem Ausgangsanschluß 4 auf, der vom Innenwiderstand der Transistoren und vom Laststrom der an die erzeugte Gleichspannung angeschlossenen Last abhängt.

Im zweiten Zweig verbindet der Transistor T21 den Eingangsanschluß 1 für den Pol A der Wechselspannung und der Transistor T22 den Eingangsanschluß 2 für den Pol B der Wechselspannung mit dem Ausgangsanschluß 3 für den Pol V_{CC} der Gleichspannung. Das Gate des Transistors T21 ist mit einem Punkt P1 verbunden, der eine positive Vorspannung von der Vorspannungsschaltung V1 liefert. Entsprechend ist das Gate des Transistors T22 mit einem Punkt P2 verbunden, der eine positive Vorspannung von der Vorspannungsschaltung V2 liefert. Die Vorspannung an den Punkten P1 und P2 ist wieder annähernd gleich der Schwellspannung des Transistors T21 bzw. T22, so daß bei den beiden Halbwellen der Eingangswechselspannung diese Transistoren abwechselnd leitend sind und den Eingangsanschluß 1 bzw. 2 mit sehr geringem Spannungsabfall mit dem Ausgangsanschluß 3 verbinden.

Die Vorspannungsschaltungen V1 und V2 sind untereinander gleich aufgebaut und entsprechen je der Vorspannungsschaltung V in der Gleichrichterschaltung nach Fig. 1. Dabei entspricht die Kapazität C1 in Fig. 1 der Kapazität C21 bzw. C22 in Fig. 4, die Zenerdiode D3 entspricht der Zenerdiode D27 bzw. D28 in Fig. 4, die Diode D2 in Fig. 1 entspricht der Diode D23 bzw. D24 in Fig. 4, die Diode D4 in Fig. 1 entspricht der Diode 21 bzw. D22 in Fig. 4, und die Kapazität C2 in Fig. 2 entspricht der Kapazität C25 bzw. C26 in Fig. 4. Bei den letzteren Kapazitäten ist der von den Dioden abgewandte Anschluß nicht direkt mit dem jeweils anderen Eingangsanschluß verbunden, sondern über den Pol Vₛₛ der Gleichspannung mit dem Ausgangsanschluß 4, der über den Transistor T11 bzw. T12 mit dem betreffenden Eingangsanschluß verbunden ist, wenn die Aufladung bzw. Entladung der Kapazität C25 bzw. C26 erfolgt.

Es ist klar, daß die Dioden D21 bis D24 und die Zenerdioden D27 und D28 in gleicher Weise als selbstsperrende Feldeffekt-Transistoren ausgebildet sein können, wie dies anhand der Fig. 2 erläutert wurde.

Eine andere Ausführung einer Brückengleichrichterschaltung, bei der die Erzeugung der Hilfsspannung zum Nachladen der Kapazitäten C21 und C22 auf etwas andere Weise erfolgt, ist in Fig. 5 dargestellt. Dabei sind Elemente mit der gleichen Funktion mit denselben Bezugszeichen bezeichnet. Der erste Zweig mit den Transistoren T11 und T12 ist unverändert gegenüber Fig. 4. Im zweiten Zweig sind die Gates der Transistoren T21 und T22 wieder mit Punkten P1 und P2 verbunden, die bei Verwendung des vorher erwähnten Leitfähigkeitstyps eine positive Vorspannung liefern.

Zunächst sei der Punkt P1 betrachtet, der über eine Kapazität C21 mit dem Eingangsanschluß 1 verbunden ist. Ferner ist der Punkt P1 über die Reihenschaltung einer Diode D23 und einer weiteren Kapazität C23 mit dem anderen Eingangsanschluß 2 verbunden. Der Verbindungspunkt dieser beiden Elemente ist über eine Diode D25 mit dem Pol V_{SS} der Gleichspannung verbunden. Die Kapazität C23 ist wieder wesentlich kleiner als die Kapazität C21.

Mit jeder Halbwelle, in der der Pol B der Eingangs-Wechselspannung positiver ist als der Pol A, wird Ladung von der Kapazität C23 über die Diode D23 auf die Kapazität C21 übertragen, während am Ende jeder solchen Halbwelle bzw. zu Beginn der anderen Halbwelle diese Ladung über die Diode D25 auf die Kapazität C23 wieder Zurückgebracht wird. Die Kapazität C21 wird sich dadurch im Laufe mehrerer Halbwellen auf eine positive Spannung gegenüber dem Eingangsanschluß 1 aufladen. Dadurch ist der Transistor T21 bereits leitend, bevor die Spannung am Eingangsanschluß 1 um die Schwellspannung des Transistors T21 hoher ist als die Spannung V_{CC} am Ausgangsanschluß 4.

Es muß jedoch auch hier verhindert sein, daß die Spannung des Punktes P1 um mehr als die Schwellenspannung des Transistors T21 positiver wird als die Spannung am Eingangsanschluß 1, d.h. daß die Kapazität C21 um mehr als diese Spannung aufgeladen wird. Daher ist der Kapazität C21 auch hier ein spannungsbegrenzendes Element in Form einer Zenerdiode D27 parallelgeschaltet, deren Durchbruchspannung möglichst geringfügig unter der Schwellenspannung des Transistors T21 liegt. Die Differenz zwischen diesen beiden Spannungen bestimmt dann im wesentlichen den Spannungsabfall zwischen der Wechselspannung bzw. deren Maximalamplitude und der Gleichspannung.

Die vorstehenden Erläuterungen gelten entsprechend auch für den Punkt P2, der über eine Kapazität C22 und eine Zener-Diode D28 mit dem Eingangsanschluß 2 und über die Reihenschaltung der Diode D24 und der Kapazität C24 mit dem Eingangsanschluß 1 verbunden ist. Auch hier ist wieder eine Diode D26 zwischen dem Verbindungspunkt der beiden letzteren Elemente und dem Ausgangsanschluß 4 als Rückladestromweg für die Kapazität C24 vorhanden.

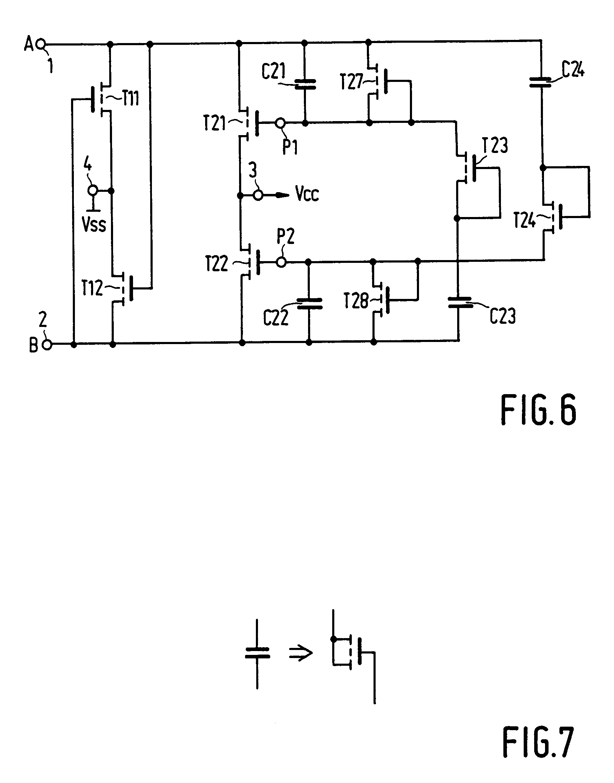

Eine Realisierung der Schaltung nach Fig. 5 als in einem Halbleiter integrierte Schaltung, die nur Feldeffekt-Transistoren verwendet, ist in Fig. 6 dargestellt. Die darin angegebenen Kapazitäten C21 bis C24 können wie auch bei den vorher beschriebenen Schaltungen in bekannter Weise so realisiert werden, wie dies in Fig. 7 dargestellt ist, d.h. es wird die Kapazität des Gates eines Feldeffekt-Transistors gegenüber der Hauptstrombahn ausgenutzt. Der Wert der Kapazität kann durch die Fläche des Gates bestimmt werden. Die Diode D23 in Fig. 5 ist in Fig. 6 durch einen Feldeffekt-Transistor T23 verwirklicht, der abgesehen von den geometrischen Abmessungen wie die Transistoren T11, T12, T21 und T22 in den beiden Zweigen der Gleichrichterbrücke ausgebildet ist. Das Gate des Transistors T23 ist mit dem einen Anschluß der Hauptstrombahn verbunden, der auch mit der Kapazität C23 verbunden ist. Wenn zunächst angenommen wird, daß die Kapazität C23 vollständig entladen ist, wird während der Halbwelle der Wechselspannung, bei der der Eingangsanschluß 2 um mehr als die Schwellspannung des Transistors T23 positiver ist als die Spannung am Punkt P1, ein Ladestrom von der Kapazität C23 über den Transistor T23 in die Kapazität C21 fließen. Die Rückladung der Kapazität C23 erfolgt dadurch, daß der Transistor T23 mit einer n-leitenden Hauptstrombahn in dem p-leitenden Substrat des Halbleiterkörpers angeordnet ist, mit dem auch der Ausgangsanschluß 4 verbunden ist. Dadurch entsteht zwischen der Hauptstrombahn und damit dem Verbindungspunkt zwischen dem Transistor T23 und der Kapazität C23 und dem Ausgangsanschluß 4 eine Diode, die der Diode D25 in Fig. 5 entspricht.

Die in Fig. 5 dargestellte Zener-Diode D27 ist in der Schaltung nach Fig. 6 durch einen Feldeffekt-Transistor T27 realisiert, dessen Hauptstrombahn parallel zur Kapazität C21 liegt und dessen Gate mit dem Punkt P1 verbunden ist. Die Schwellspannung des Transistors T27 sollte höchstens gleich der Schwellspannung des Transistors T21 sein, zweckmäßig sollte sie geringfügig darunter liegen. Wenn nämlich der Punkt P1 durch Aufladung der Kapazität C21 eine Spannung annimmt, die positiver ist als die Schwellenspannung des Transistors T27, ist dessen Gatespannung also auch entsprechend positiver als die Spannung an dem mit dem Eingangsanschluß 1 verbundenen Anschluß der Hauptstrombahn, so daß der Transistor T27 dann leitend wird und eine weitere Aufladung der Kapazität C21 verhindert. Auf diese Weise wird der Transistor T21 erst leitend, wenn die Spannung am Eingangsanschluß 1 geringfügig höher ist als die Spannung am Ausgangsanschluß 3 der Gleichspannung.

Entsprechendes gilt für den Punkt P2, der über einen dem Transistor T27 entsprechenden Feldeffekt-Transistor T28 mit dem Eingangsanschluß 2 und über einen dem Transistor T23 entsprechenden Transistor T24 mit der Kapazität C24 verbunden ist. Da die Schaltung auf diese Weise für beide Halbwellen der Wechselspannung symmetrisch aufgebaut ist, wird insgesamt eine Gleichrichtung mit einem kleinen Spannungsabfall und damit mit einem guten Wirkungsgrad erreicht.

Es sei bemerkt, daß in der Schaltung nach Fig. 5 die Kapazität C23 bzw. C24 je durch einen hochohmigen Widerstand ersetzt und die Diode D25 bzw. D26 weggelassen werden kann, so daß auf jeder Seite eine Schaltung entsprechend der Fig. 3 entsteht. Entsprechend kann in Fig. 6 die Kapazität C23 bzw. C24 durch eine direkte Verbindung ersetzt und der Transistor T23 und T24 sehr hochohmig ausgeführt werden.

## Patentansprüche

1. Gleichrichterschaltung mit einem ersten und einem zweiten Eingangsanschluß zum Zuführen einer Eingangsspannung und einem ersten und einem zweiten Ausgangsanschluß zum Abgeben einer Gleichspannung, mit wenigstens einem ersten selbstsperrenden Feldeffekt-Transistor (FET), dessen Hauptstrombahn zwischen dem ersten Eingangsanschluß und dem ersten Ausgangsanschluß angeordnet ist, und mit einer dem ersten FET zugeordneten Vorspannungsschaltung, die eine mit dem Gate des ersten FET verbundene erste gleichrichtende Anordnung enthält, um eine Vorspannung zwischen diesem Gate und dem ersten Eingangsanschluß zu erzeugen, wobei die Vorspannung die wirksame Schwellspannung des FET's verringert,
dadurch gekennzeichnet, daß für eine periodisch variierende Eingangsspannung, insbesondere eine Wechselspannung, die Vorspannungsschaltung (V) zum Erzeugen einer im wesentlichen konstanten Vorspannung eingerichtet ist und eine erste Kapazität (C1; C21, C22), die zwischen dem Gate des ersten FET (T1; T21, T22) und dem ersten Eingangsanschluß (1; 1, 2) angeordnet ist, sowie eine erste Impedanz (C2; R; C23, C24) enthält, die in Reihe mit der ersten gleichrichtenden Anordnung (D2; D23, D24) zwischen dem Gate des ersten FET (T1; T21, T22) und einem mit dem zweiten Eingangsanschluß (2; 2, 1) gekoppelten Schaltungspunkt angeordnet ist.

2. Gleichrichterschaltung nach Anspruch 1,
dadurch gekennzeichnet, daß die erste gleichrichtende Anordnung (D2; D23, D24) ein erster zusätzlicher selbstsperrender FET (T2; T23, T24) vom gleichen Leitfähigkeitstyp wie der erste FET (T1; T21, T22) ist und daß das Gate des ersten zusätzlichen FET mit dem einen Anschluß seiner Hauptstrombahn verbunden ist.

3. Gleichrichterschaltung nach Anspruch 1 oder 2,
dadurch gekennzeichnet, daß parallel zur ersten Kapazität (C1; C21, C22) ein spannungsbegrenzendes Element (D3; D27, D28) geschaltet ist.

4. Gleichrichterschaltung nach Anspruch 3,
dadurch gekennzeichnet, daß das spannungsbegrenzende Element (D3; D27, D28) ein zweiter zusätzlicher selbstsperrender FET (T3; T27, T28) vom gleichen Leitfähigkeitstyp wie der erste FET (T1; T21, T22) ist, dessen Gate mit dem einen Anschluß seiner Hauptstrombahn verbunden ist und dessen Schwellspannung im wesentlichen gleich der Schwellspannung des ersten FET (T1; T21, T22) ist.

5. Gleichrichterschaltung nach einem der Ansprüche 1 bis 4 für eine im wesentlichen symmetrische Wechselspannung,
dadurch gekennzeichnet, daß die erste Impedanz ein strombegrenzendes Element, insbesondere ein im wesentlichen ohmscher Widerstand (R) ist und mit dem zweiten Eingangsanschluß (2) direkt verbunden ist.

6. Gleichrichterschaltung nach einem der Ansprüche 1 bis 4,
dadurch gekennzeichnet, daß die erste Impedanz eine zweite Kapazität (C2; C23, C24) ist und daß der Verbindungspunkt zwischen der zweiten Kapazität und der ersten gleichrichtenden Anordnung (D2; D23, D24) über eine zweite gleichrichtende Anordnung (D4; D25, D26) mit dem ersten Eingangsanschluß (1; 1, 2) gekoppelt ist.

7. Gleichrichterschaltung nach Anspruch 6,
dadurch gekennzeichnet, daß die zweite gleichrichtende Anordnung (D4) ein dritter zusätzlicher selbstsperrenden FET (T4) des gleichen Leitfähigkeitstyps wie der erste FET (T1) ist, dessen Gate mit dem einen Anschluß seiner Hauptstrombahn verbunden ist.

8. Brückengleichrichterschaltung mit einem ersten und einem zweiten Eingangsanschluß für eine im wesentlichen symmetrische periodische Wechselspannung als Eingangsspannung und einem ersten und einem zweiten Ausgangsanschluß für eine zu erzeugende Gleichspannung sowie mit zwei Zweigen, bei denen im ersten Zweig zwei FET eines ersten Leitfähigkeitstyps zwischen jedem der Eingangsanschlüsse und dem ersten Ausgangsanschluß angeordnet sind, deren Gates mit dem jeweils anderen Eingangsanschluß verbunden sind, und im zweiten Zweig zwei Gleichrichterschaltungen nach einem der Ansprüche 6 oder 7 mit FETs ebenfalls des ersten Leitfähigkeitstyps zwischen jedem der Eingangsanschlüsse und dem zweiten Ausgangsanschluß angeordnet sind,
dadurch gekennzeichnet, daß von jeder Gleichrichterschaltung die zweite Kapazität (C25, C26) mit dem ersten Ausgangsanschluß (Vss) und die zweite gleichrichtende Anordnung (D21, D22) direkt mit dem ersten Eingangsanschluß (1, 2) verbunden ist.

9. Brückengleichrichterschaltung mit einem ersten und einem zweiten Eingangsanschluß für eine im wesentlichen symmetrische periodische Wechselspannung als Eingangsspannung und einem ersten und einem zweiten Ausgangsanschluß für eine zu erzeugende Gleichspannung sowie mit zwei Zweigen, bei denen im ersten Zweig zwei FET eines ersten Leitfähigkeitstyps zwischen jedem der Eingangsanschlüsse und dem ersten Ausgangsanschluß angeordnet sind, deren Gates mit dem jeweils anderen Eingangsanschluß verbunden sind, und im zweiten Zweig zwei Gleichrichterschaltungen nach einem der Ansprüche 6 oder 7 mit FETs ebenfalls des ersten Leitfähigkeitstyps zwischen jedem der Eingangsanschlüsse und dem zweiten Ausgangsanschluß angeordnet sind,
dadurch gekennzeichnet, daß von jeder Gleichrichterschaltung die zweite gleichrichtende Anordnung (D25, D26) mit dem ersten Ausgangsanschluß (Vss) und die zweite Kapazität (C23, C24) direkt mit dem zweiten Eingangsanschluß (2, 1) verbunden ist.

10. Gleichrichterschaltung nach Anspruch 9, wobei alle FETs (T11, T12, T21, T22, T23, T24) in einem gemeinsamen Halbleiter integriert sind,
dadurch gekennzeichnet, daß in jeder Gleichrichterschaltung die zweite gleichrichtende Anordnung (D25, D26) durch den Übergang zwischen der Hauptstrombahn des ersten zusätzlichen FET (T23, T24) und den mit dem ersten Ausgangsanschluß (Vss) verbundenen Halbleiterkörper gebildet ist.

## Claims

1. A rectifier circuit, comprising a first and a second input terminal for application of an input voltage and a first and a second output terminal for supplying a direct voltage, at least one first normally-off field-effect transistor (FET) whose main current path is arranged between the first input terminal and the first output terminal, and a bias circuit which is associated with the first FET and which comprises a first rectifying device which is connected to the gate of the first FET and which serves to generate a bias voltage between this gate and the first input terminal, the bias voltage reducing the effective threshold voltage of the FET,
characterized in that for a periodically varying input voltage, notably an alternating voltage, the bias circuit (V) is arranged to generate an essentially constant bias voltage and comprises a first capacitance (C1; C21, C22), arranged between the gate of the first FET (T1; T21, T22) and the first input terminal (1; 1, 2), as well as a first impedance (C2; R; C23, C24) which is connected, in series with the first rectifying device (D2; D23, D24), between the gate of the first FET (T1; T21, T22) and a circuit point coupled to the second input terminal (2; 2, 1).

2. A rectifier circuit as claimed in Claim 1, characterized in that the first rectifying device (D2; D23, D24) is a first additional normally-off FET (T2; T23, T24) of the same conductivity type as the first FET (T1; T21, T22), and that the gate of the first additional normally-off FET is connected to one terminal of its main current path.

3. A rectifier circuit as claimed in Claim 1 or 2, characterized in that a voltage-limiting element (D3; D27, D28) is arranged in parallel with the first capacitance (C1; C21, C22).

4. A rectifier circuit as claimed in Claim 3, characterized in that the voltage-limiting element (D3; D27, D28) is a second additional normally-off FET (T3; T27, T28) of the same conductivity type as the first FET (T1; T21, T22), which second additional normally-off FET has its gate connected to one terminal of its main current path and has a threshold voltage substantially equal to the threshold voltage of the first FET (T1; T21, T22).

5. A rectifier circuit as claimed in any one of the Claims 1 to 4 for an essentially symmetrical alternating voltage, characterized in that the first impedance is a current-limiting element, notably an essentially ohmic resistance (R), and is connected directly to the second input terminal (2).

6. A rectifier circuit as claimed in any one of the Claims 1 to 4,
characterized in that the first impedance is a second capacitance (C2; C23, C24) and that the junction of the second capacitance and the first rectifying device (D2; D23, D24) is coupled to the first input terminal (1; 1, 2) via a second rectifying device (D4; D25, D26).

7. A rectifier circuit as claimed in Claim 6, characterized in that the second rectifying device (D4) is a third additional normally-off FET (T4) of the same conductivity type as the first FET (T1), its gate being connected to one terminal of its main current path.

8. A bridge rectifier circuit, comprising a first and a second input terminal for an essentially symmetrical periodic alternating voltage as an input voltage and a first and a second output terminal for a direct voltage to be generated, as well as two branches, in the first branch two FETs of a first conductivity type being connected between each of the input terminals and the first output terminal, their gates being connected to the respective other input terminal, in the second branch two rectifier circuits as claimed in one of the Claims 6 or 7 with FETs which are also of the first conductivity type being connected between each of the input terminals and the second output terminal, characterized in that the second capacitance (C25, C26) of each rectifier circuit is connected to the first output terminal (Vₛₛ) and the second rectifying device (D21, D22) is connected directly to the first input terminal (1, 2).

9. A bridge rectifier circuit, comprising a first and a second input terminal for an essentially periodic alternating voltage as an input voltage and a first and a second output terminal for a direct voltage to be generated, as well as two branches, in the first branch two FETs of a first conductivity type being connected between each of the input terminals and the first output terminal, their gates being connected to the respective other input terminal, in the second branch two rectifier circuits as claimed in one of the Claims 6 or 7 with FETs which are also of the first conductivity type being connected between each of the input terminals and the second output terminal,
characterized in that the second rectifying device (D25, D26) of each rectifier circuit is connected to the first output terminal (Vₛₛ) and the second capacitance (C23, C24) is connected directly to the second input terminal (2, 1).

10. A rectifier circuit as claimed in Claim 9, in which all FETs (T11, T12, T21, T22, T23, T24) are integrated in a common semiconductor, characterized in that in each rectifier circuit the second rectifying device (D25, D26) is formed by the junction of the main current path of the first additional FET (T23, T24) and the semiconductor body connected to the first output terminal (Vₛₛ).

## Revendications

1. Circuit redresseur avec une première et une deuxième borne d'entrée pour l'alimentation d'une tension d'entrée et une première et une deuxième borne de sortie pour l'évacuation d'une tension continue avec au moins un premier transistor à effet de champ (TEC) autobloquant dont le trajet principal du courant est disposé entre la première borne d'entrée et la première borne de sortie et avec un circuit de prétension affecté au premier TEC qui contient un premier arrangement redresseur relié à la grille du premier TEC pour produire une prétension entre cette grille et la première borne d'entrée, la prétension réduisant la tension de seuil active des TEC, caractérisé en ce que, pour une tension d'entrée variant périodiquement, en particulier une tension alternative, le circuit de prétension (V) est agencé pour la production d'une prétension essentiellement constante et contient un premier condensateur (C1; C21, C22) qui est disposé entre la grille du premier TEC (T1; T21, T22) et la première borne d'entrée (1; 1, 2) et une première impédance (C2; R; C23, C24) qui est disposée en série avec le premier arrangement redresseur (D2; D23, D24) entre la grille du premier TEC (T1; T21, T22) et un point de connexion couplé à la deuxième borne d'entrée (2; 2, 1).

2. Circuit redresseur selon la revendication 1, caractérisé en ce que le premier arrangement redresseur (D2; D23, D24) est un premier TEC autobloquant supplémentaire (T2; T23, T24) du même type de conductivité que le premier TEC (T1; T21, T22) et en ce que la grille du premier TEC supplémentaire est reliée à l'une des bornes de son trajet principal de courant.

3. Circuit redresseur selon la revendication 1 ou 2, caractérisé en ce qu'un élément limiteur de tension (D3; D27, D28) est monté parallèlement au premier condensateur (C1; C21, C22).

4. Circuit redresseur selon la revendication 3, caractérisé en ce que l'élément limiteur de tension (D3; D27, D28) est un deuxième TEC autobloquant supplémentaire (T3; T27, T28) du même type de conductivité que le premier TEC (T1; T21, T22) dont la grille est reliée à l'une des bornes de son trajet principal de courant et dont la tension de seuil est essentiellement égale à la tension de seuil du premier TEC (T1; T21, T22).

5. Circuit redresseur selon l'une des revendications 1 à 4 pour une tension alternative essentiellement symétrique, caractérisé en ce que la première impédance est un élément limiteur de tension, en particulier une résistance essentiellement ohmique (R) et est relié directement à la deuxième borne d'entrée (2).

6. Circuit redresseur selon l'une des revendications 1 à 4, caractérisé en ce que la première impédance est un deuxième condensateur (C2; C23, C24) et en ce que le point de jonction entre le deuxième condensateur et le premier arrangement redresseur (D2; D23, D24) est couplé à la première borne d'entrée (1; 1, 2) par un deuxième arrangement redresseur (D4; D25, D26).

7. Circuit redresseur selon la revendication 6, caractérisé en ce que le deuxième arrangement redresseur (D4) est un troisième TEC autobloquant supplémentaire (T4) du même type de conductivité que le premier TEC (T1) dont la grille est reliée à l'une des bornes de son trajet principal de courant.

8. Circuit redresseur de pont avec une première et une deuxième borne d'entrée pour une tension alternative périodique essentiellement symétrique comme tension d'entrée et une première et une deuxième borne de sortie pour une tension continue à produire ainsi qu'avec deux branches, deux TEC d'un premier type de conductivité étant disposés entre chacune des bornes d'entrée et la première borne de sortie de la première branche, dont les grilles sont reliées à l'autre borne d'entrée respective et deux circuits redresseurs selon l'une des revendications 6 ou 7 étant disposés avec des TEC du premier type de conductivité également entre chacune des bornes d'entrée et la deuxième borne de sortie dans la deuxième branche, caractérisé en ce que le deuxième condensateur (C25, C26) est relié directement à la première borne de sortie (Vₛₛ) et le deuxième arrangement redresseur (D21, D22) est relié directement à la première borne d'entrée (1, 2) par chaque circuit redresseur.

9. Circuit redresseur de pont avec une première et une deuxième borne d'entrée pour une tension alternative périodique essentiellement symétrique comme tension d'entrée et une première et une deuxième borne de sortie pour une tension continue à produire ainsi qu'avec deux branches, deux TEC d'un premier type de conductivité étant disposés entre chacune des bornes d'entrée et la première borne de sortie dans la première branche dont les grilles sont reliées à l'autre borne d'entrée respective et deux circuits redresseurs selon l'une des revendications 6 ou 7 avec des TEC du premier type de conductivité également étant disposés entre chacune des bornes d'entrée et la deuxième borne de sortie dans la deuxième branche, caractérisé en ce que, par chaque circuit redresseur, le deuxième arrangement redresseur (D25, D26) est relié à la première borne de sortie (Vₛₛ) et le deuxième condensateur (C23, C24) directement à la deuxième borne d'entrée (2, 1).

10. Circuit redresseur selon la revendication 9, tous les TEC (T11, T12, T21, T22, T23, T24) étant intégrés dans un semi-conducteur commun, caractérisé en ce que le deuxième arrangement redresseur (D25, D26) est formé dans chaque circuit redresseur par le passage entre le trajet principal de courant du premier TEC supplémentaire (T23, T24) et le corps à semi-conducteurs relié à la première borne de sortie (Vₛₛ).
